(19) Europäisches Patentamt
European Patent Office
Office européen des brevets

(11) EP 0 489 373 B1

(12) # EUROPÄISCHE PATENTSCHRIFT

(45) Veröffentlichungstag und Bekanntmachung des Hinweises auf die Patenterteilung:
**14.08.1996 Patentblatt 1996/33**

(51) Int. Cl.$^6$: **B32B 27/32**

(21) Anmeldenummer: **91120609.2**

(22) Anmeldetag: **29.11.1991**

(54) **Beidseitig siegelbare, biaxial orientierte Polyolefinmehrschichtfolie mit erhöhtem Schrumpf und verbesserten Barriereeigenschaften**

Biaxially orientated shrinkable polyolefin laminate, sealable on both sides and with barrier properties

Laminé nétrécissable de polyolefine, scellable à deux faces, ayant des propriétés de barrière

(84) Benannte Vertragsstaaten:
**BE DE ES FR GB IT NL**

(30) Priorität: **06.12.1990 DE 4038935**

(43) Veröffentlichungstag der Anmeldung:
**10.06.1992 Patentblatt 1992/24**

(73) Patentinhaber: **HOECHST AKTIENGESELLSCHAFT**
**65926 Frankfurt am Main (DE)**

(72) Erfinder:
- **Murschall, Ursula, Dr.**
  **W-6505 Nierstein (DE)**
- **Peiffer, Herbert, Dr.**
  **W-6500 Mainz-Finthen (DE)**
- **Schlögl, Gunter, Dr.**
  **W-6233 Kelkheim (DE)**

(56) Entgegenhaltungen:

| | |
|---|---|
| **EP-A- 0 021 672** | **EP-A- 0 027 586** |
| **EP-A- 0 340 579** | **EP-A- 0 477 797** |
| **EP-A- 0 479 101** | **EP-A- 0 480 282** |
| **EP-A- 0 482 501** | **GB-A- 2 055 688** |
| **US-A- 3 940 379** | **US-A- 4 390 385** |

- **EP-A-0021672**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Rank Xerox (UK) Business Services
2.13.0/3.4

## Beschreibung

Die vorliegende Erfindung betrifft eine beidseitig siegelbare, transparente, co-extrudierte Polyolefinmehrschichtfolie, deren Basisschicht im wesentlichen aus einem harzmodifizierten Propylenpolymeren und deren Deckschichten im wesentlichen aus siegelbaren Olefinpolymeren bestehen.

Beidseitig siegelbare, biaxial orientierte Polyolefinmehrschichtfolien, bei denen die Basisschicht aus Propylenhomopolymeren und die beiden Siegelschichten (Aussenschichten oder Deckschichten) aus siegelbaren Olefinpolymeren bestehen, sind in zahlreichen Druckschriften beschrieben (z.B. EP-A-0 194 588, EP-A-0 008 904, US-A-4,419,411). Diese Polyolefinmehrschichtfolien besitzen die für Verpackungsfolien wichtigen Eigenschaften, nämlich einen großen Siegelbereich, eine gute Heißsiegelbarkeit, eine relativ hohe Kratzfestigkeit, eine geringe Reibung und damit gute Laufeigenschaften auf schnellaufenden Verpackungsmaschinen unterschiedlichen Typs. Die bekannten Folien lassen allerdings hinsichtlich ihrer optischen Eigenschaften noch zu wünschen übrig.

Die beschriebenen Folien werden in der Regel so hergestellt, daß sie möglichst dimensionsstabil sind, d. h. diese Folien weisen einen möglichst niedrigen Schrumpf in Längs- und Querrichtung auf. Im allgemeinen zeigen derartige Verpackungsfolien bei 120 °C Schrumpfwerte von kleiner 4 % in Längsrichtung und kleiner 2 % in Querrichtung. Bisher war man der Meinung, daß Folien mit diesen niedrigen Schrumpfwerten ein optisch gutes Einschlagbild liefern. Bei genauerem Hinsehen sind die Packungen aber lose oder blusig eingeschlagen und zeigen an den Kanten Falten und Wellen.

Die beschriebenen Folien zeigen weiterhin die für Polypropylenfolien üblichen Wasserdampf- und Sauerstoffbarriereeigenschaften, die noch verbesserungs würdig sind.

GB 2 055 688 beschreibt eine Verpackungsfolie mit einer Deckschicht aus einer Mischung eines Copolymeren A und B. A ist ein Propylen-Ethylen-Copolymer. B ist ein Propylen Copolymer mit einem $\alpha$-olefin von 4 bis 10 Catomen. Die Folie hat gemäß der Beschreibung einen Schrumpf in Längs- und Querrichtung von $\geqq$ 3,5 %. Nach den Beispielen liegt der Schrumpf dieser Folien in Längsrichtung in einem Bereich von 5-6 %.

Die Aufgabe der vorliegenden Erfindung bestand darin, eine biaxial orientierte, beidseitig siegelbare Polyolefinmehrschichtfolie zur Verfügung zu stellen, die gleichzeitig exzellente optische Eigenschaften (niedrige Folientrübung, hoher Oberflächenglanz), verbesserte Barriereeigenschaften hinsichtlich Durchtritt von Wasserdampf sowie Sauerstoff, gute Maschinengängigkeit auf schnellaufenden Verpackungsmaschinen und ein enges, wellen- und faltenfreies, brillantes Einschlagbild zeigt.

Gelöst wird diese Aufgabe durch eine Mehrschichtfolie der eingangs genannten Gattung, deren kennzeichnende Merkmale darin zu sehen sind, daß

a) die Mehrschichtfolie bei 120 °C einen Längsschrumpf von größer 7%, und einen Querschrumpf von größer 5 %, besitzt, wobei die Schrumpfwerte bei einer Temperatur von 120°C und einer Dauer von 15 min gemäß DIN 40 434 ermittelt werden, und

b) die Basisschicht der Mehrschichtfolie im wesentlichen aus einem Propylenpolymeren besteht, das peroxidisch abgebaut ist, wobei sein Abbaufaktor A im Bereich von 3 bis 10 liegt, und

c) das Propylenpolymere der Basisschicht 5 bis 25 Gew.-% eines Kohlenwasserstoffharzes enthält,

d) die Deckschichten der Mehrschichtfolie im wesentlichen aus einem statistischen Ethylen-Propylen-Copolymeren bestehen, das einen Ethylengehalt von 2 bis 8 Gew.-%, einen Verteilungsfaktor $V_F$ von größer 8 und eine Thermooxidationstemperatur $T_{OX}$ von größer 230°C besitzt, wobei der Verteilungsfaktor und die Thermooxidationstemperatur gemäß den Angaben in der Beschreibung bestimmt werden, und

e) der Oberflächenglanz der Folie bei größer 100, liegt, wobei der Oberflächenglanz nach DIN 67 530 bei einem Meßwinkel von 20° bestimmt wird, und

f) die Mehrschichtfolie eine Trübung von kleiner 22 %, besitzt, wobei die Trübung in Anlehnung an ASTM-D 1003-52 unter Verwendung einer 1° Spaltblende und an vier übereinanderliegenden Folienlagen gemessen wird.

Eine oder beide Siegelschichten können auf freier Oberfläche coronabehandelt sein, wobei die Oberflächenspannung direkt nach der Herstellung bei größer 36 mN/m, vorzugsweise zwischen 38 und 41 mN/m, liegt.

Die erfindungsgemäße Mehrschichtfolie zeichnet sich insbesondere durch ganz besondere Schrumpfeigenschaften, verbesserte Barriereeigenschaften hinsichtlich Durchtriff von Wasserdampf sowie Sauerstoff und exzellente optische Eigenschaften aus.

Überraschenderweise hat sich gezeigt, daß eine Folie der eingangs genannten Gattung mit einem erhöhten Längsschrumpf von größer 7 % bei 120°C, vorzugsweise von 8 bis 15 %, und einem erhöhten Querschrumpf von größer 5 %

bei 120 °C, vorzugsweise von 6 bis 12 %, im Vergleich zu den dimensionsstabilen Folien nach dem Stand der Technik, ein deutlich engeres, falten- und wellenfreies Einschlagbild liefern. Durch den engen, falten- und wellenfreien Einschlag, in Kombination mit einer niedrigen Folientrübung und einem hohen Oberflächenglanz, gewinnen die mit Folie eingeschlagenen Packungen ein wesentlich attraktiveres, brillianteres und damit werbewirksames Aussehen.

Überraschenderweise hat sich auch gezeigt, daß die Schrumpfeigenschaften zur Erzielung dieses Effektes in engen Grenzen eingehalten werden müssen.

Liegt der Längsschrumpf (gemessen bei 120 °C) unter 7 % und/oder liegt der Querschrumpf (gemessen bei 120 °C) unter 5 %, so zeigen die Packungen einen losen, blusigen Einschlag mit Falten- und Wellenbildung an den Kanten. Beträgt der Schrumpf in Längsrichtung mehr als 15 % und/oder liegen die Schrumpfwerte in Querrichtung über 12 %, so können die Packungen, insbesondere Weichpackungen, durch den Einschlag deformiert werden. Bei zu hohen Schrumpfwerten sehen die Siegelnähte außerdem unschön aus, da sich Schrumpffältchen im Siegelbereich bilden.

Die angegebenen Längs- und Querschrumpfwerte beziehen sich jeweils auf die jeweilige Längenausdehnung der Folie vor dem Schrumpfprozeß. Die angegebenen Schrumpfwerte sind im Umluftofen bei einer Temperatur von 120°C und einer Dauer von 15 min gemäß DIN 404 34 ermittelt worden.

Die Basisschicht der erfindungsgemäßen Folie besteht aus einem peroxidisch abgebauten Propylenpolymeren, das zum überwiegenden Teil aus Propylen besteht und einen Schmelzpunkt im Bereich von 162 bis 168 °C besitzt. Isotaktisches Polypropylen mit einem n-heptanlöslichen Anteil von 6 Gew.-% und weniger stellt ein bevorzugtes Propylenpolymeres dar. Um die geforderte gute Optik zu erreichen, hat das peroxidisch abgebaute Propylenhomopolymerisat einen Abbaufaktor A von 3 bis 10, vorzugsweise von 4 bis 8. Der Schmelzindex des Polypropylen-Ausgangspulvers liegt vorzugsweise unterhalb von 1,5 g/10 min, besonders bevorzugt im Bereich von 0,2 bis 0,9 g/10 min (Messung DIN 53 735, mit 21,6 N Belastung bei 230 °C). Das Polypropylen-Ausgangspulver wird durch Zusatz von organischen Peroxiden (z.B. Dialkyperoxide wie 2,5-Dimethyl-2,5-di-(t-butylperoxy)-hexan oder Di-t-butylperoxid) während des Extrudierens auf einen Granulat-Schmelzindex von 2 bis 5,5 g/10 min (Messung DIN 53 735, 21,6 N Belastung und 230 °C) abgebaut. Der Abbaufaktor A des Propylenhomopolymerisates ist definiert als

$$A = \frac{S_{G(PP)}}{S_{P(PP)}}$$

mit $S_{G(PP)}$ = Schmelzindex des abgebauten PP-Granulates und $S_{P(PP)}$ = Schmelzindex des PP-Ausgangspulvers, wobei der Schmelzindex nach DIN 53 735 (21,6 N Belastung, 230 °C) gemessen wird.

Der peroxidische Abbau bzw. peroxidisch abgebaute oder CR ("controlled rheology") Polypropylene als solche sind in der Literatur bekannt (vgl. Plastverarbeiter, 38. Jahrgang, 1987, Nr. 4; Polymer Engineering and Science, März 1989, Vol. 29, No. 6; Plastverarbeiter, 36. Jahrgang, 1985, Nr. 11). Derartige peroxidisch abgebaute Propylenhomopolymere kommen insbesondere bei der Spritzgußtechnik und der Faserherstellung zum Einsatz. Wie groß der Abbaufaktor bei diesen Produkten ist, wird aber nicht beschrieben.

Überraschenderweise hat sich gezeigt, daß der Abbaufaktor des Propylenhomopolymeren der Basisschicht in engen Grenzen eingehalten werden muß. Liegt der Abbaufaktor des Propylenhomopolymerisates unter 3, verschlechtern sich die optischen Eigenschaften (deutliche Erhöhung der Folientrübung, Erniedrigung des Oberflächenglanzes). Liegt der Abbaufaktor über 10, treten Probleme bei der Verstreckung auf, was sich äußerst negativ auf die Laufsicherheit bei der Folienproduktion auswirkt. Bei einem Abbaufaktor über 10 ist das Propylenhomopolymere nur noch in einem sehr engen Temperaturbereich oder gar nicht mehr verstreckbar.

Überraschenderweise hat sich gezeigt, daß sich durch Einarbeiten eines niedrigmolekularen Harzes mit einem Erweichungspunkt von >120 °C (gemessen nach ASTM E-28) in das peroxidisch abgebaute Propylenhomopolymere der Basisschicht die Wasserdampf- und Sauerstoffbarriereeigenschaften der Folie wesentlich verbessern. Das natürliche oder synthetische Harz mit einem Erweichungspunkt von >120 °C wird zur Verbesserung der Barriereeigenschaften in einer Konzentration von 5 bis 25 Gew.-% (bezogen auf die Gesamtmasse der Basisschicht) in das Propylenhomopolymere eingearbeitet.

Unter den zahlreichen niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in Ullmanns Encyklopädie der Techn. Chemie, 4. Auflage, Band 12, Seiten 525 bis 555, beschrieben).

Die Erdölharze sind solche Kohlenwasserstoffharze, die durch Polymerisation von tiefzersetzten (deep-decomposed) Erdölmaterialien in Gegenwart eines Katalysators hergestellt werden. Diese Erdölmaterialien enthalten gewöhnlich ein Gemisch von harzbildenden Substanzen wie Styrol, Methylstyrol, Vinyltoluol, Inden, Methylinden, Butadien, Isopren, Piperylen und Pentylen. Die Styrolharze sind niedrigmolekulare Homopolymere von Styrol oder Copolymere von Styrol mit anderen Monomeren wie α-Methylstyrol, Vinyltoluol und Butadien. Die Cyclopentadienharze sind Cyclopentadienhomopolymere oder Cyclopentadiencopolymere, die aus Kohlenteerdestillaten und zerlegtem Erdölgas erhalten werden. Diese Harze werden hergestellt, indem die Materialien, die Cyclopentadien enthalten, während einer langen Zeit bei hoher Temperatur gehalten werden. In Abhängigkeit von der Reaktionstemperatur können Dimere, Trimere oder Oligomere erhalten werden.

Die Terpenharze sind Polymerisate von Terpenen, d.h. Kohlenwasserstoffen der Formel $C_{10}H_{16}$, die in fast allen etherischen Ölen oder ölhaltigen Harzen von Pflanzen enthalten sind, und phenolmodifizierte Terpenharze. Als spezielle Beispiele der Terpene sind β-Pinen, α-Pinen, Dipenten, Limonen, Myrcen, Camphen und ähnliche Terpene zu nennen. Bei den Kohlenwasserstoffharzen kann es sich auch um die sogenannten modifizierten Kohlenwasserstoffharze handeln. Die Modifizierung erfolgt im allgemeinen durch Reaktion der Rohstoffe von der Polymerisation, durch Einführung spezieller Monomere oder durch Reaktion des polymerisierten Produktes, wobei insbesondere Hydrierungen oder Teilhydrierungen vorgenommen werden.

Als Kohlenwasserstoffharze werden außerdem Styrolhomopolymerisate, Styrolcopolymerisate, Cyclopentadienhomopolymerisate, Cyclopentadiencopolymerisate und/oder Terpenpolymerisate mit einem Erweichungspunkt von jeweils >120 °C eingesetzt (bei den ungesättigten Polymerisaten ist das hydrierte Produkt bevorzugt). Ganz besonders bevorzugt werden die Cyclopentadienpolymerisate mit einem Erweichungspunkt von >120 °C in der Basisschicht eingesetzt.

Sofern die siegelbaren Deckschichten ebenfalls ein Harz enthalten, so können die oben für die Basisschicht aufgezählten Harze eingesetzt werden.

Die siegelbaren Oberflächenschichten bestehen im wesentlichen aus einem statistischen Ethylen-Propylen-Copolymeren, das einen Ethylengehalt von 2 bis 8 Gew.-%, vorzugsweise von 3 bis 7 Gew.-%, einen Verteilungsfaktor $V_F$ von größer 8 und eine Thermooxydationstemperatur $T_{OX}$ von größer 230 °C besitzt.

Der Ethylengehalt und der Verteilungsfaktor des Copolymeren werden mit Hilfe der $^{13}C$-NMR-Spektoskopie bestimmt. Die Messungen wurden mit einem Kernresonanzspektrometer der Firma Bruker, Modell HX-270 (Deutschland), das mit einem Rechner der Firma Bruker, Typ Bruker Aspect 2000, ausgerüstet war, durchgeführt.

Das zu charakterisierende Ethylen-Propylen-Copolymere wird in einem Lösungsmittelgemisch aus 65 Vol.-% Hexachlorbenzol und 35 Vol.-% 1,1-Dideuterotetrachlorethan gelöst, so daß eine 10 Gew-%ige Lösung entstand. Als Bezugsstandard wurde Octamethyltetrasiloxan (OMTS) zugegeben. Das 67,9-MHz-$^{13}C$-Kernresonanzspektrum wurde bei 130 °C gemessen. Die Auswertung der Spektren erfolgte nach der in J.C. Randall, Polymer Sequence Distribution (Academic Press, New York, 1977) beschriebenen Vorgehensweise.

Der Verteilungsfaktor ist definiert als

$$V_F = \frac{C_i}{C_G - C_i}$$

wobei $C_G$ den Gesamtgehalt an Ethylen im Copolymerisat in Gew.-% bedeutet und $C_i$ den Anteil an Ethylen in Gew.-%, der als isolierter Ethylenanteil vorliegt, d.h. ein einzelner Ethylenbaustein befindet sich in der nachfolgend skizzierten Art isoliert zwischen zwei Propylenbausteinen:

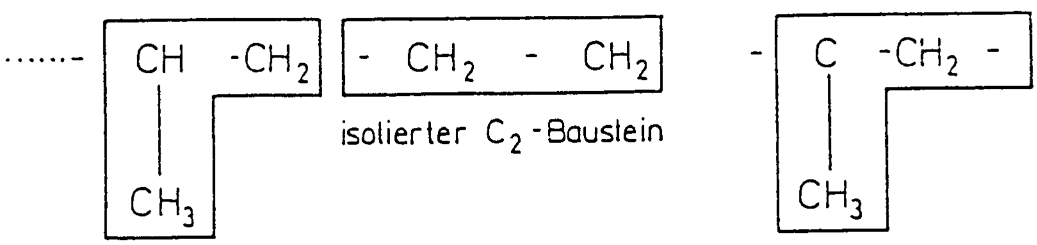


Die Bestimmung der idealisierten Thermooxidationstemperatur $T_{OX}$ erfolgt auf folgende Weise:

2 bis 5 mg des zu untersuchenden Rohstoffs werden in einem Differentialkalorimeter mit einer Heizrate von 20 K/min aufgeheizt. Als Spülgas wird Luft verwendet, die Ausgangstemperatur ist 295 K. Bei der Messung wird die Veränderung des Wärmeflusses mit ansteigender Temperatur dargestellt. Während diese Kurve nach dem Schmelzen des Rohstoffes zunächst nahezu waagerecht verläuft (Basislinie), steigen diese Werte infolge Oxidation ab einer bestimmten Temperatur an (exothermer Ast).

Die idealisierte Thermooxidationstemperatur wird als Schnittpunkt der den exothermen Ast des Thermogramms verlängernden Geraden mit der Basislinie definiert.

Überraschenderweise hat sich gezeigt, daß die genannten Parameter für das Propylen-Ethylen-Copolymere der polyolefinischen Oberflächenschichten der erfindungsgemäßen Folie in sehr engen Grenzen eingehalten werden müssen, um alle in der Aufgabenstellung genannten Eigenschaften gleichzeitig optimal zu realisieren. Der Ethylengehalt und der Verteilungsfaktor $V_F$ des Copolymeren sind für die Oberflächenbehandelbarkeit mittels elektrischer Coronaentladung, für die Langzeitbedruckbarkeit sowie für die optischen Eigenschaften von Bedeutung. Liegt der Ethylengehalt unter 2,0 Gew.-%, ist die Coronabehandelbarkeit schlecht sowie das Abklingverhalten der Behandlungswirkung ungünstig. Liegt der Ethylengehalt über 7,0 Gew.-% oder der Verteilungsfaktor unter 8, so verschlechtern sich die optischen Eigenschaften, insbesondere der Oberflächenganz.

Die Thermooxidationstemperatur ist für die Farbhaftung von besonderer Bedeutung. Liegt die Thermooxidationstemperatur der bedruckbaren Deckschicht unter 230 °C, so bilden sich aufgrund der Coronabehandlung Abbauprodukte in dem Maße auf der Oberfläche, daß die Haftung der Druckfarbe verschlechtert wird.

Erfindungsgemäß können die Deckschichten mindestens ein Antiblockmittel enthalten. Geeignete Antiblockmittel für diese Schichten sind anorganische Zusatzstoffe wie Siliziumdioxid, Calciumkarbonat, Magnesiumsilikat und/oder Antiblockmittel wie z.B. Polyamid, Polyester sowie insbesondere Benzoguanamin-Formaldehyd-Copolymere und dergleichen. Wesentlich für das Antiblockmittel ist, daß die mittlere Teilchengröße zwischen 1 und 6 µm, vorzugsweise zwischen 2 und 5 µm liegt. Siliziumdioxid und Calciumkarbonat sind als Antiblockmittel bevorzugt.

Besonders bevorzugt werden diese Mittel eingesetzt, wenn sie kugelförmige Gestalt besitzen. Derartige kugelförmige anorganische Materialien und deren Zusatz zu Folien aus thermoplastischen Kunststoffen werden z.B. in der EP-A-0 236 945 und der DE-A-38 01 535 beschrieben. Die Zusatzmenge an Antiblockmittel beträgt 0,1 bis 2 Gew.-%, vorzugsweise 0,1 bis 0,5 Gew.-%, bezogen auf das Gesamtgewicht der Oberflächenschicht.

Die Schichtdicke der Siegelschicht liegt bei größer 0,4 µm, vorzugsweise zwischen 0,4 und 1,0 µm. Liegt die Schichtdicke unter 0,4 µm verschlechtern sich die Siegeleigenschaften (Erhöhung der Siegelanspringtemperatur, Erniedrigung der Siegelnahtfestigkeit) drastisch. Bei Schichtdicken von größer 1,0 µm verschlechtern sich die Folienoptik und das Verarbeitungsverhalten.

Um bestimmte Eigenschaften der erfindungsgemäßen Polyolefinfolie noch weiter zu verbessern, können sowohl die Basisschicht als auch die beiden Siegelschichten entsprechende Zusätze in einer jeweils wirksamen Menge enthalten, vorzugsweise Antistatika, Gleitmittel, Stabilisatoren und Neutralisationsmittel.

Bevorzugte Antistatika sind Alkalialkansulfonate, polyethermodifizierte, das sind ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit 2 Hydroxyalkyl-($C_1$-$C_4$)-Gruppen substituiert sind, worunter N,N-bis-(2-hydroxyethyl)-alkylamine mit $C_{10}$-$C_{20}$, vorzugsweise $C_{12}$-$C_{18}$ als Alkylgruppen besonders geeignet sind. Die wirksame Menge an Antistatikum liegt im Bereich von 0,05 bis 0,3 Gew.-% bezogen auf die Schicht.

Beispiele für Gleitmittel sind höhere aliphatische Säureamide, höhere aliphatische Säureester, Wachse und Metallseifen sowie Polydimethylsiloxan. Die wirksame Menge an Gleitmittel liegt im Bereich von 0,1 bis 3 Gew.-%, bezogen auf das Gewicht der Schicht. Als besonders geeignet hat sich der Zusatz von höheren aliphatischen Säureamiden, z.B. Erucasäureamid, mit 0,15 bis 0,25 Gew.-% in der Basisschicht und/oder den Deckschichten erwiesen. Sehr gute Ergebnisse werden durch den Zusatz von Polydimethylsiloxan in eine oder beide Deckschichten erreicht. Die Zusatzmenge liegt zweckmäßig im Bereich von 0,3 bis 2,0 Gew.-%, wobei die Viskosität des Polydimethylsiloxans zwischen 10.000 und 1.000.000 $mm^2/s$ liegt.

Die Basisschicht und die Oberflächenschichten enthalten vorzugsweise einen phenolischen Stabilisator mit einer Molmasse von mehr als 500 g/mol. Als Stabilisator eignen sich besonders Pentaerythrityl-tetrakis-3-(3,5-di-tertiärbutyl-4-hydroxyphenyl)-propionat oder 1,3,5-Trimethyl-2,4,6-tris(3,5-di-tertiärbutyl-4-hydroxybenzyl)-benzol. Die Zusatzmenge beträgt 0,1 bis 0,6 Gew.-%, vorzugsweise 0,15 bis 0,3 Gew.-%. Zur Neutralisation der Katalysatorreste des Basisstoffes und des Deckschichtstoffes wird vorzugsweise Calciumstearat und/oder Calciumkarbonat einer mittleren Teilchengröße von höchstens 0,05 µm, einer absoluten Teilchengröße von kleiner 5 µm und einer spezifischen Oberfläche von mindestens 80 $m^2/g$ eingesetzt. Die Zusatzmenge beträgt 0,01 bis 0,05 Gew.-%.

Das Ethylen-Propylen-Copolymere der Deckschichten besitzt einen niedrigeren Schmelzpunkt als das peroxidisch abgebaute Propylenpolymere der Basisschicht. Der Schmelzpunkt des Deckschichtrohstoffes liegt im allgemeinen im Bereich von 80 bis 150 °C.

Der Schmelzflußindex des Copolymeren der Siegelschicht liegt höher als der des Propylenhomopolymeren der Basisschicht. Der Schmelzflußindex des Ethylen-Propylen-Copolymeren beträgt im allgemeinen 5 bis 12g/10 min bei 230 °C und 21,6 N Belastung (DIN 53 735).

Die Gesamtdicke der erfindungsgemäßen Mehrschichtfolie kann innerhalb weiter Grenzen variieren und richtet sich insbesondere nach dem beabsichtigten Einsatz. Ihre Gesamtdicke beträgt im allgemeinen 10 bis 60 µm, wobei die Siegelschichten jeweils größer 0,4 µm, vorzugsweise 0,5 bis 1,0 µm dick sind (die Dicke der Basisschicht macht 50 bis 90 % der Gesamtdicke aus).

Die erfindungsgemäße Mehrschichtfolie zeichnet sich insbesondere durch die verbesserten Barriereeigenschaften hinsichtlich Durchtritt von Wasserdampf und Sauerstoff, ihre hervorragenden optischen Eigenschaften und die beschriebenen, erhöhten Schrumpfeigenschaften in Längs- und Querrichtung aus. Ihr Oberflächenglanz (Meßwinkel 20°) liegt bei größer 100, vorzugsweise bei 105 bis 130, bestimmt nach DIN 67 530, und die Trübung der Folie (4-lagig gemessen) beträgt weniger als 22 %, vorzugsweise 10 bis 18 %, wobei die Trübung in Anlehnung an ASTM-D 1003-52 gemessen wird.

Die beschriebenen hohen Schrumpfwerte erhält man überraschenderweise durch folgende Veränderungen der üblichen Verfahrensbedingungen bei der Herstellung der Folie:

- Absenkung der Temperatur bei der Streckung,
- Erhöhung des Längsstreckverhältnisses,
- Erniedrigung des Querstreckverhältnisses,
- Erhöhung der Konvergenz während der Fixierung.

Die eingangs genannte Aufgabe der Erfindung wird auch durch ein Verfahren zur Herstellung der vorstehend beschriebenen Folie gelöst. Das erfindungsgemäße Verfahren besteht darin, daß mittels Extrusion bzw. Coextrusion in einer Breitschlitzdüse zunächst eine Vorfolie hergestellt wird, die dann auf einer Kühlwalze verfestigt und daran anschließend in Längs- und Querrichtung durch Strecken orientiert wird. Erfindungsgemäß werden die Bedingungen in der Längsstreckung so gewählt, daß die längsgestreckte Folie hochorientiert ist. Die Voraussetzung für die Erzielung eines hohen Längsschrumpfes sind dann besonders günstig. Die Längsstreckung wird durchgeführt bei einer Temperatur von weniger als 120°C, vorzugsweise im Bereich von 95 bis 115 °C, und mit einem Streckverhältnis von größer 5:1, vorzugsweise im Bereich von (5,5 bis 8,0):1.

Günstige Querstrecktemperaturen liegen bei größer 140 °C, vorzugsweise bei 145 bis 160 °C. Das Querstreckverhältnis soll andererseits einen Wert von 10:1 nicht überschreiten. Bevorzugt wird hier ein Bereich von 9:1 bis 6:1. Die Verweildauer in der Querstreckung sollte bei kleiner 10 sec liegen. Anderenfalls besteht die Gefahr, daß der durch die Längsstreckung induzierte Längsschrumpf relaxiert.

Nach der Streckung der Folie in Querrichtung schließt sich eine abschießende Fixierstufe an. Dabei wird die Folie bei einer Temperatur von 20 bis 40 °C unterhalb der Temperatur bei der Querstreckung, insbesondere bei einer Temperatur unterhalb von 130 °C, vorzugsweise von unterhalb von 120 °C, in dem Streckrahmen konvergierend weitergeführt. Die Konvergenz während der Fixierstufe beträgt vorzugsweise 15 bis 20 %.

Die Bedruckbarkeit, Metallisierbarkeit bzw. Verklebbarkeit der Folie wird durch eine der üblichen Oberflächenbehandlungen vor dem Aufrollen erreicht, z.B. elektrische Coronabehandlung und/oder Flammbehandlung. Die Behandlungsintensitäten liegen im üblichen Rahmen. Behandlungsintensitäten von 38 bis 41 mN/m sind bevorzugt.

Die erfindungsgemäße, schrumpfende Mehrschichtfolie besitzt eine Kombination von Eigenschaften, die sie in besonders hohem Maße geeignet macht für ihren bestimmungsgemäßen Verwendungszweck als Verpackungsfolie oder Einschlagfolie auf schnellaufenden Einschlagmaschinen. Sie weist nämlich all die Eigenschaften auf, die von Polyolefinfolien im Hinblick auf enges, falten-und wellenfreies, brilliantes, werbewirksames Einschlagbild gefordert werden. Aufgrund ihrer verbesserten Barriereeigenschaften hinsichtlich Durchtritt von Wasserdampf und Sauerstoff bleiben die verpackten Güter oder Lebensmittel wesentlich länger frisch.

Sie weist insbesondere auf:

- verbesserte Barriereeigenschaften hinsichtlich Wasserdampf- und Sauerstoffdurchtritt,
- einen hohen Längsschrumpf (gemessen bei 120 °C) von größer 7 %,vorzugsweise von 8 bis 15 %,
- einen hohen Querschrumpf (gemessen bei 120 °C) von größer 5 %, vorzugsweise von 6 bis 12 %,
- eine niedrige Folientrübung und eine homogene Folienoptik,
- einen beidseitig hohen Oberflächenglanz,
- eine beidseitige Siegelbarkeit,
- eine hohe Kratzfestigkeit beider Oberflächenschichten,
- eine gute Oberflächenbehandelbarkeit,
- gute Sofort- und Langzeitbedruckbarkeits- und -beschichtbarkeitseigenschaften,
- gute Weiterverarbeitungseigenschaften.

Verzichtet man auf die Flamm- oder Coronabehandlung, so eignet sich die erfindungsgemäße Polyolefinmehrschichtfolie insbesondere als Zigaretteneinschlagfolie, da sie neben den wichtigen Eigenschaften, die im Hinblick auf schnellaufende Verpackungsmaschinen gefordert werden, eine extrem niedrige Trübung und einen hohen Glanz besitzt. Außerdem erzeugt sie einen sehr engen, falten- und wellenfreien Zigaretteneinschlag, der brilliant und werbewirksam aussieht.

Weiterhin besitzt sie eine niedrige Wasserdampfdurchlässigkeit und eine niedrige Sauerstoffdurchlässigkeit,so daß die mit der erfindungsgemäßen Folie verpackten Zigaretten wesentlich länger frisch bleiben und deutlich langsamer austrocknen.

Die Erfindung wird nun anhand von Ausführungsbeispielen noch weiter erläutert.

<u>Beispiel 1</u>

Mit Hilfe des Coextrusionsverfahrens wird aus einer Breitschlitzdüse bei einer Extrusionstemperatur von 260 °C eine insgesamt 1 mm dicke Dreischichtfolie extrudiert, deren Basisschicht aus einem peroxidisch abgebauten (isotaktischen) Propylenhomopolymerisat mit einem n-heptanlöslichen Anteil von 4,5 Gew.-% und einem Schmelzpunkt von 165 °C als Hauptkomponente besteht.

Das Propylenpolymere wurde von einem Polypropylen-Ausgangspulver mit einem Schmelzindex $S_{P(PP)}$ von 0,7 g/10 min (bestimmt nach DIN 53 735 bei 21,6 N Belastung und 230 °C) durch Zusatz von Di-t-butylperoxid auf einen Granulatschmelzindex $S_{G(PP)}$ von 3,5 g/10 min (DIN 53 735 bei 21,6 N Belastung und 230 °C) abgebaut, woraus sich ein Abbaufaktor A von 5 ergibt.

Das Propylenpolymere der Basisschicht enthält 10 Gew.-% Harz mit einem Erweichungspunkt von 140°C ((R)Escorez ECR 356, Exxon, Darien, Connecticut, USA).

Die Basisschicht ist von zwei Siegelschichten (Außenschicht, Deckschichten) umgeben, d.h. die Dreischichtfolie zeigt einen A-B-A-Aufbau (A=Siegelschichten, B=Basisschicht).

Alle Schichten enthalten zur Stabilisierung 0,12 Gew.-% Pentaerythrityl-tetrakis-3-(3,5-di-tertiärbutyl-4-hydroxyphenyl)-propionat ((R)Irganox 1010) sowie zur Neutralisierung saurer Katalysatorreste 0,06 Gew.-% Calciumstearat. Die Basisschicht enthält weiterhin 0,15 Gew.-% an N,N-bis-(2-hydroxyethyl)-($C_{10}$-$C_{20}$)-alkylamin ((R)Armostat 300) als Antistatikum.

Die polyolefinischen Siegelschichten bestehen aus einem statistischen Copolymerisat aus Ethylen- und Propylenbausteinen mit einem Ethylengehalt von 4,5 Gew.-% und einem Propylengehalt von 95,5 Gew.-%. Das Copolymerisat ist mit 0,33 Gew.-% Siliciumdioxid mit einem mittleren Teilchendurchmesser von 2,0 µm und einem Formfaktor von 1 und 0,8 Gew.-% Polydimethylsiloxan mit einer kinematischen Viskosität von 30.000 $mm^2/s$ bei 25 °C ausgerüstet. Das Ethylen-Propylen-Copolymere besitzt folgende Eigeschaften:

| | |
|---|---|
| - Verteilungsfaktor | $V_F = 17$ |
| - idealisierte Thermooxidationstemperatur | 256 °C |
| - Schmelzflußindex (DIN 53 735) | 6,0 g/10 min |
| - Schmelzpunkt | 135 °C |

Die biaxial orientierte, mehrschichtige Polyolefinfolie wird über die Verfahrensschritte Coextrusion, Abkühlen, Längsstreckung, Querstreckung, Fixierung hergestellt. Die Gesamtdicke der biaxial orientierten Folie beträgt 20 µm, wobei die Deckschichten jeweils 0,8 µm dick sind.

Die Herstellungsbedingungen in den einzelnen Verfahrensschritten sind:

| | |
|---|---|
| Extrusion: | Extrusionstemperatur 260 °C |
| | Temperatur der Abzugswalze 60 °C |
| Längsstreckung: | Streckwalze T = 107 °C |
| | Kühlwalze T = 90 °C |
| | Längsstreckung $S_L = 6,5$ |
| Querstreckung: | Aufheizfelder T = 163 °C |
| | Streckfelder T = 148 °C |
| | Querstreckverhältnis $S_Q = 8$ |
| Fixierung: | Temperatur T = 120 °C |
| | Zeitdauer t = 2 s |
| | Konvergenz = 18 % |

Die Eigenschaften der Folie sind in der beigefügten Tabelle aufgeführt.

Beispiel 2

Beispiel 1 wird wiederholt.

Das (isotaktische) Propylenhomopolymerisat der Basisschicht wird von einem Polypropylen-Ausgangspulver mit einem Schmelzindex $S_{P(PP)}$ von 0,5 g/10 min (bestimmt nach DIN 53 735 bei 21,6 N Belastung und 230 °C) durch Zusatz von Di-t-butylperoxid auf einen Granulatschmelzindex $S_{G(PP)}$ von 3,5 g/10 min (DIN 53 735 bei 21,6 N Belastung und 230 °C) abgebaut, woraus sich ein Abbaufaktor A von 7 ergibt.

Die hergestellte Dreischichtfolie besitzt jetzt allerdings einen A-B-C-Aufbau (A=Siegelschicht, C=Siegelschicht, B=Basisschicht). Das Ethylen-Propylen-Copolymere der A-Schicht enthält 1,6 Gew.-% Polydimethylsiloxan mit einer kinematischen Viskosität von 500.000 $mm^2/s$ bei 25 °C und 0,3 Gew.-% Siliciumdioxid mit einem mittleren Teilchendurchmesser von 4 µm. Das statistische Copolymere der C-Schicht enthält 0,33 Gew.-% Siliciumdioxid mit einem mittleren Teilchendurchmesser von 2 µm und kein Polydimethylsiloxan. Die C-Schicht wird coronabehandelt, wobei die Oberflächenspannung dieser Schicht direkt nach der Behandlung bei 40 mN/m liegt.

Die Herstellungsbedingungen in den einzelnen Verfahrensschritten entsprechen denen aus Beispiel 1.

Beispiel 3

Beispiel 1 wird wiederholt.

Das Polypropylen der Basisschicht enthält 15 Gew.-% Harz mit einem Erweichungspunkt von 140 °C ((R)Escorez ECR 356, Exxon, Darien, Connecticut, USA).

Vergleichsbeispiel 1

Es wird eine Dreischichtfolie hergestellt wie in Beispiel 1. Das isotaktische Propylenhomopolymerisat besitzt ebenfalls einen Granulatschmelzindex von 3,5 g/10 min (DIN 53 735 bei 21,6 N Belastung und 230 °C). Das Propylenpolymere der Basisschicht ist aber nicht peroxidisch abgebaut. Das Polypropylen der Basisschicht enthält kein Harz.

Die Herstellungsbedingungen in den einzelnen Verfahrensschritten sind:

| | |
|---|---|
| Extrusion: | Extrusionstemperatur 260 °C |
| | Temperatur der Abzugswalze 60 °C |
| Längsstreckung: | Streckwalze T = 120 °C |
| | Kühlwalze T 100 °C |
| | Längsstreckung $S_L$ = 5 |
| Querstreckung: | Aufheizfelder T = 175 °C |
| | Streckfelder T = 162 °C |
| | Querstreckverhältnis $S_Q$ = 10 |
| Fixierung: | Temperatur = 130 °C |
| | Zeitdauer = 5 s |
| | Konvergenz = 10 % |

Vergleichsbeispiel 2

Es wird eine Dreischichtfolie mit einem A-B-C-Aufbau entsprechend Beispiel 1 der Europäischen Patentschrift 0 194 588 hergestellt.

Vergleichsbeispiel 3

Es wird eine Dreischichtfolie entsprechend Beispiel 4 der US-A-4 419 411 hergestellt.

Zur Charakterisierung der Rohstoffe und der Folien wurden neben den bereits genannten Methoden folgende Meßmethoden benutzt:

Schmelzflußindex

DIN 53 735 bei 21,6 N Belastung und 230 °C.

Schmelzpunkt

DSC-Messung, Maximum der Schmelzkurve, Aufheizgeschwindigkeit 20°C/min.

Trübung

Die Trübung der Folie wird in Anlehnung an ASTM-D 1003-52 gemessen, wobei anstelle einer 4°-Lochblende eine 1°-Spaltblende eingesetzt und die Trübung in Prozent für vier übereinanderliegende Folienlagen angegeben wird. Die vier Lagen wurden gewählt, da man hierdurch den optimalen Meßbereich ausnutzt. Die Trübungsbewertung erfolgte mit:

| | | |
|---|---|---|
| ≦17 % | = sehr gut | (++) |
| >17 % bis 20 % | = gut | (+) |
| >20 % bis 25 % | = mäßig | (±) |
| >25 % | = schlecht | (-) |

Glanz

Der Glanz wird nach DIN 67 530 bestimmt. Gemessen wird der Reflektorwert als optische Kenngröße für die Oberfläche einer Folie. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden. Die Glanzbewertung (Einstrahlwinkel 20°) erfolgt mit:

| | | |
|---|---|---|
| >115 | = sehr gut | (++) |
| ≦115 bis 110 | = gut | (+) |
| <110 bis 100 | = mäßig | (±) |
| <100 | = schlecht | (-) |

Kratzfestigkeit bzw. Kratzempfindlichkeit

Die Kratzempfindlichkeit wird in Anlehnung an DIN 53 754 bestimmt.

Für die Bestimmung der Kratzfestigkeit wird das Abriebmeßgerät Taber Modell 503 Abraser der Firma Teledyne Taber benutzt, wobei Reibräder der Marke Calibrade R H 18, die mit 250 g belastet werden, eingesetzt werden. Unter Kratzfestigkeit bzw. Kratzempfindlichkeit versteht man die Trübungszunahme der verkratzten Folie im Vergleich zur Originalfolie nach 50 Umdrehungen des Probentellers. Die Kratzfestigkeit wird mit sehr gut (++) bezeichnet, wenn die Trübungszunahme kleiner 22 % beträgt, mit gut (+), wenn die Trübungszunahme bei 22 bis 25 % liegt, mit mäßig (±), wenn die Trübungszunahme bei 25 bis 30 % liegt und mit schlecht (-) bei Trübungszunahme von größer 30 %.

Bestimmung der Siegelnahtfestigkeit

Zwei 15 mm breite Folienstreifen werden übereinander gelegt und bei 130 °C, einer Siegelzeit von 0,5 s und einem Siegeldruck von 1,5 N/cm$^2$ (Gerät: Brugger Typ NDS, einseitig beheizte Siegelbacke)versiegelt. Die Siegelnahtfestigkeit wird nach der T-Peel-Methode bestimmt.

Bestimmung der Siegelanspringtemperatur

Mit dem Siegelgerät HSG/ET der Firma Brugger werden heißgesiegelte Proben (Siegelnaht 20 mm x 100 mm) hergestellt, indem eine Folie bei unterschiedlichen Temperaturen mit Hilfe zweier beheizter Siegelbacken bei einem Siegeldruck von 1,5 N/cm$^2$ und einer Siegeldauer von 0,5 s gesiegelt wird. Aus den gesiegelten Proben werden Prüfstreifen von 15 mm Breite geschnitten. Die T-Siegelnahtfestigkeit, d.h. die zur Trennung der Prüfstreifen erforderliche Kraft, wird mit einer Zugprüfmaschine bei 200 mm/min Abzugsgeschwindigkeit bestimmt, wobei die Siegelnahtebene einen rechten Winkel mit der Zugrichtung bildet. Die Siegelanspringtemperatur (oder minimale Siegeltemperatur) ist die Temperatur, bei der eine Siegelnahtfestigkeit von mindestens 0,5 N/15 mm erreicht wird.

Bestimmung der Coronabehandlungsintensität

Die Coronabehandlung wurde so ausgeführt, daß die behandelte Folienoberfläche jeweils eine Behandlungsintensität von 39 bis 40 mN/m direkt nach der Behandlung besaß. Die Behandlungsintensität wurde mittels der sogenannten Tintenmethode (DIN 53 364) bestimmt.

Langzeitbehandlungsintensität

Die Behandlungsintensitätsmessung wurde im Abstand von jeweils 14 Tagen wiederholt. Als sehr gut wurde das Abklingverhalten bezeichnet, wenn die Behandlungsintensität nach vier Monaten noch mindestens 37 mN/m betrug. Als schlecht wurde das Abklingverhalten bezeichnet, wenn die Behandlungsintensität kleiner als 35 mN/m betrug.

Schrumpf

Die Längs- und Querschrumpfwerte beziehen sich jeweils auf die jeweilige Längenausdehung der Folie vor dem Schrumpfprozeß. Die Schrumpfwerte werden im Umluftofen bei einer Temperatur von 120 °C und einer Dauer von 15 min gemäß DIN 40 434 ermittelt.

Maschinengängigkeit

Die Bestimmung der Maschinengängigkeit auf der Einschlagmaschine erfolgte visuell und wurde wie folgt bewertet:

| | | |
|---|---|---|
| sehr gut | (++) | <2 % der Probepäckchen sind mangelhaft eingeschlagen |
| gut | (+) | 2 bis 6% der Probepäckchen sind mangelhaft eingeschlagen |
| mäßig | (±) | 6 bis 12 % der Probepäckchen sind mangelhaft eingeschlagen |
| schlecht | (-) | >12 % der Probepäckchen sind mangelhaft eingeschlagen |

Einschlagbild

Das Einschlagbild wurde visuell beurteilt (vgl. Tabelle 1).

Bestimmung der Wasserdampf- und Sauerstoffdurchlässigkeit

Die Wasserdampfdurchlässigkeit wird gemäß DIN 53 122 Teil 2 bestimmt. Die Bestimmung der Sauerstoffbarrierewirkung erfolgt gemäß DIN 53 380 Teil 3 bei einer relativen Luftfeuchte von 53 %.

Die Überlegenheit der erfindungsgemäßen Folie entsprechend Beispiel 1, Beispiel 2 und Beispiel 3 geht aus Tabelle 1 deutlich hervor. Die Vergleichsbeispiele 1 bis 3 zeigen zwar bei einzelnen Punkten jeweils gute Eigenschaften, allerdings kann keine dieser Mehrschichtfolien nach den Vergleichsbeispielen alle Anforderungen gleichzeitig erfüllen.

Die Mehrschichtfolien nach dem Stand der Technik weisen alle deutlich niedrigere Schrumpfwerte in Längs- und Querrichtung auf und liefern folglich einen losen, blusigen Packungseinschlag mit Falten und Wellen an den Kanten. Außerdem haben die Mehrschichtfolien nach dem Stand der Technik eine deutlich höhere Folientrübung und einen niedrigeren Oberflächenglanz.

Weiterhin zeigen die Mehrschichtfolien der Vergleichsbeispiele eine höhere Wasserdampfdurchlässigkeit und eine höhere Sauerstoffdurchlässigkeit.

Lediglich die erfindungsgemäßen Mehrschichtfolien nach den Beispielen 1 bis 3 erfüllen alle Anforderungen gleichzeitig und führen in Folge des engen, falten-und wellenfreien Einschlags in Kombination mit guten optischen Eigenschaften zu einer eingeschlagenen Packung, die ein attraktives, brilliantes, werbewirksames Aussehen besitzt.

Das Verpackungsgut (Lebensmittel, Zigaretten) bleibt aufgrund der niedrigeren Wasserdampf- und Sauerstoffdurchlässigkeit länger frisch und trocknet wesentlich langsamer aus.

| | Trübung (4-lagig) [%] | Glanz (Meßwinkel 20°) 1.Seite | 2.Seite | Kratzfestigkeit [%] 1.Seite | 2.Seite | Längsschrumpf (120°C/15min) [%] | Querschrumpf (120°C/15min) [%] | Maschinengängigkeit (vis. Beurteilung) Einschlagmaschine | Einschlagbild (vis. Beurteilung) | Wasserdampf-durchlässigkeit [g/(cm$^2$*d)] | Sauerstoff-durchlässigkeit [g/(cm$^2$*d)] |
|---|---|---|---|---|---|---|---|---|---|---|---|
| B1 | ++ | ++ | ++ | ++ | ++ | 12,0 | 9,0 | ++ | eng, faltenfrei | 0,79 | 1040 |
| B2 | ++ | ++ | ++ | ++ | ++ | 11,0 | 9,5 | ++ | eng, faltenfrei | 0,82 | 1080 |
| B3 | ++ | ++ | ++ | ++ | ++ | 11,5 | 9,0 | ++ | eng, faltenfrei | 0,68 | 840 |
| VB1 | +- | +- | +- | ++ | ++ | 3,5 | 2,1 | + | lose,blusig,Wellen, Falten an den Kanten | 1,50 | 1650 |
| VB2 | - | - | - | +- | +- | 2,5 | 1,7 | +- | lose,blusig,Wellen, Falten an den Kanten | 1,47 | 1590 |
| VB3 | - | - | - | +- | +- | 3,2 | 1,5 | +- | lose,blusig,Wellen, Falten an den Kanten | 1,53 | 1710 |

Tabelle 1:

B : Beispiel
VB : Vergleichsbeispiel

## Patentansprüche

1. Beidseitig siegelbare, transparente, coextrudierte Polyolefinmehrschichtfolie, deren Basisschicht im wesentlichen aus einem harzmodifizierten Propylenpolymeren und deren Deckschichten im wesentlichen aus siegelbaren Olefinpolymeren bestehen, dadurch gekennzeichnet, daß

   a) die Mehrschichtfolie einen Längsschrumpf von größer 7%, und einen Querschrumpf von größer 5 %, besitzt, wobei die Schrumpfwerte bei einer Temperatur von 120°C und einer Dauer von 15 min gemäß DIN 40 434 ermittelt werden, und

   b) die Basisschicht der Mehrschichtfolie im wesentlichen aus einem Propylenpolymeren besteht, das peroxidisch abgebaut ist, wobei sein Abbaufaktor A im Bereich von 3 bis 10 liegt, und

   c) das Propylenpolymere der Basisschicht 5 bis 25 Gew.-% eines Kohlenwasserstoffharzes enthält,

   d) die Deckschichten der Mehrschichtfolie im wesentlichen aus einem statistischen Ethylen-Propylen-Copolymeren bestehen, das einen Ethylengehalt von 2 bis 8 Gew.-%, einen Verteilungsfaktor $V_F$ von größer 8 und eine Thermooxidationstemperatur $T_{OX}$ von größer 230°C besitzt, wobei der Verteilungsfaktor und die Thermooxidationstemperatur gemäß den Angaben in der Beschreibung bestimmt werden, und

   e) der Oberflächenglanz der Folie bei größer 100, liegt, wobei der Oberflächenglanz nach DIN 67 530 bei einem Meßwinkel von 20° bestimmt wird, und

   f) die Mehrschichtfolie eine Trübung von kleiner 22 %, besitzt, wobei die Trübung in Anlehnung an ASTM-D 1003-52 unter Verwendung einer 1° Spaltblende und an vier übereinanderliegenden Folienlagen gemessen wird.

2. Folie nach Anspruch 1 dadurch gekennzeichnet daß die Folie bei 120°C einen Längsschrumpf von 8-15 % und einen Querschrumpf von 6-12 % besitzt.

3. Folie nach einem oder mehreren der Ansprüche 1-2, dadurch gekennzeichnet daß der Oberflächenglanz im Bereich von 105-130 liegt.

4. Folie nach einem oder mehreren der Ansprüche 1-3, dadurch gekennzeichnet, daß die Folie eine Trübung im Bereich von 10-18 % besitzt.

5. Folie nach einem oder mehreren der Ansprüche 1-4, dadurch gekennzeichnet, daß wenigstens eine der Siegelschichten auf ihrer Oberfläche coronabehandelt ist, wobei ihre Oberflächenspannung direkt nach der Behandlung bei größer 36 mN/m, liegt.

6. Folie nach Anspruch 5, dadurch gekennzeichnet, daß die Oberflächenspannung direkt nach der Behandlung im Bereich von 38-41 mN/m liegt.

7. Folie nach einem oder mehreren der Ansprüche 1-6, dadurch gekennzeichnet, daß das Kohlenwasserstoffharz der Basisschicht einen Erweichungspunkt von >120°C besitzt.

8. Folie nach einem oder mehreren der Ansprüche 1-7, dadurch gekennzeichnet, daß wenigstens eine der Deckschichten zusätzlich ein Antiblockmittel enthält, wobei das Antiblockmittel eine mittlere Teilchengröße zwischen 1 und 6 µm, besitzt, und wobei die Zusatzmenge an Antiblockmittel 0,1 bis 2 Gew.-%, beträgt, bezogen auf das Gesamtgewicht der Deckschicht.

9. Folie nach Anspruch 8, dadurch gekennzeichnet, daß die mittlere Teilchengröße des Antiblockmittels im Bereich von 2-5 µm liegt und die Menge des Antiblockmittels im Bereich von 0,1 bis 0,5 Gew.-% liegt.

10. Folie nach Anspruch 8 und/oder 9, dadurch gekennzeichnet, daß das Antiblockmittel Siliziumdioxid, Calciumkarbonat, Magnesiumsilikat, Polyamid, Polyester und/oder Benzoguanamin-Formaldehyd-Copolymere ist.

11. Folie nach einem oder mehreren der Ansprüche 1 bis 10, dadurch gekennzeichnet, daß die Schichtdicke der Deckschicht größer 0,4 µm ist.

12. Folie nach Anspruch 11 dadurch gekennzeichnet, daß die Schichtdicke der Deckschicht im Bereich von 0,4-1,0 µm liegt.

13. Folie nach einem oder mehreren der Ansprüche 1 bis 12, dadurch gekennzeichnet, daß die Gesamtdicke der Mehrschichtfolie 10 bis 60 µm beträgt, wobei die Siegelschichten jeweils größer 0,4 µm, dick sind und wobei die Dicke der Basisschicht 50 bis 90 % der Gesamtdicke ausmacht.

14. Verfahren zur Herstellung der Folie nach einem der Ansprüche 1 bis 13, bei dem mittels Extrusion bzw. Coextrusion in einer Breitschlitzdüse zunächst eine Vorfolie hergestellt wird, die dann auf einer Kühlwalze verfestigt und daran anschließend in Längs- und Querrichtung durch Strecken orientiert wird, dadurch gekennzeichnet, daß die Längsstreckung bei einer Temperatur von weniger als 120°C durchgeführt wird, und mit einem Streckverhältnis von größer 5:1.

15. Verfahren nach Anspruch 14, dadurch gekennzeichnet, daß die Längsstreckung bei einer Temperatur im Bereich von 95-115°C und mit einem Streckverhältnis im Bereich von 5,5:1 bis 8,0:1 durchgeführt wird.

16. Verfahren nach Anspruch 14 und/oder 15, dadurch gekennzeichnet, daß die Querstrecktemperatur größer als 140 °C ist, und das Querstreckverhältnis einen Wert von 10:1 nicht überschreitet.

17. Verfahren nach Anspruch 16, dadurch gkennzeichnet, daß die Querstreckung bei einer Temperatur im Bereich von 145 bis 160°C und mit einem Querstreckverhältnis im Bereich von 6:1 bis 9:1 durchgeführt wird.

18. Verfahren nach einem oder mehreren der Ansprüche 14-17, dadurch gekennzeichnet, daß sich nach der Streckung der Folie in Querrichtung eine Fixierstufe anschließt, bei der die Folie bei einer Temperatur von 20 bis 40 °C unterhalb der Temperatur der Querstreckung, in dem Streckrahmen konvergierend weitergeführt wird und wobei die Konvergenz während der Fixierstufe 15 bis 20 % beträgt.

19. Vefahren nach Anspruch 18, dadurch gekennzeichnet, daß die Temperatur während der Fixierstufe unterhalb von 130°C liegt.

## Claims

1. A transparent, coextruded, multilayer polyolefin film which can be heat-sealed on both sides and whose base layer essentially comprises a resin-modified propylene polymer and whose outer layers essentially comprise heat-sealable olefin polymers, wherein

   a) the multilayer film has a longitudinal shrinkage of greater than 7% and a transverse shrinkage of greater than 5%, the shrinkage values being determined at a temperature of 120°C for a period of 15 min in accordance with DIN 40434, and

   b) the base layer of the multilayer film essentially comprises a propylene polymer which has been peroxidically degraded, its degradation factor A being in the range from 3 to 10, and

   c) the propylene polymer of the base layer contains from 5 to 25% by weight of a hydrocarbon resin,

   d) the outer layers of the multilayer film essentially comprise a random ethylene-propylene copolymer which has an ethylene content of from 2 to 8% by weight, a distribution factor $V_F$ of greater than 8 and a thermooxidation temperature $T_{OX}$ of above 230°C, where the distribution factor and the thermooxidation temperature are determined as described in the description, and

   e) the surface gloss of the film is greater than 100, the surface gloss being determined in accordance with DIN 67 530 at a measurement angle of 20°, and

   f) the multilayer film has a haze of less than 22%, the haze being measured in accordance with ASTM-D 1003-52 using a 1° slit diaphragm on four film layers lying one on top of the other.

2. A film as claimed in claim 1, which has a longitudinal shrinkage of 8-15% and a transverse shrinkage of 6-12%, both at 120°C.

3. A film as claimed in one or more of claims 1 and 2, wherein the surface gloss is in the range from 105 to 130.

4. A film as claimed in one or more of claims 1 to 3, wherein the film has a haze in the range from 10 to 18%.

5. A film as claimed in one or more of claims 1 to 4, wherein at least one of the heat-sealing layers has been corona-treated on its surface, its surface tension immediately after the treatment being greater than 36 mN/m.

6. A film as claimed in claim 5, wherein the surface tension immediately after the treatment is in the range from 38 to 41 mN/m.

7. A film as claimed in one or more of claims 1 to 6, wherein the hydrocarbon resin of the base layer has a softening point of > 120°C.

8. A film as claimed in one or more of claims 1 to 7, wherein at least one of the outer layers additionally contains an antiblocking agent, where the antiblocking agent has a mean particle size of from 1 to 6 µm, and where the amount of antiblocking agent added is from 0.1 to 2% by weight, based on the total weight of the outer layer.

9. A film as claimed in claim 8, wherein the mean particle size of the antiblocking agent is in the range from 2 to 5 µm, and the amount of the antiblocking agent is in the range from 0.1 to 0.5% by weight.

10. A film as claimed in claim 8 and/or 9, wherein the antiblocking agent is silicon dioxide, calcium carbonate, magnesium silicate, polyamide, polyester and/or benzoguanimine-formaldehyde copolymer.

11. A film as claimed in one or more of claims 1 to 10, wherein the thickness of the outer layers is greater than 0.4 µm.

12. A film as claimed in claim 11, wherein the thickness of the outer layers is in the range from 0.4 to 1.0 µm.

13. A film as claimed in one or more of claims 1 to 12, wherein the total thickness of the multilayer film is from 10 to 60 µm, the heat-sealing layers each having a thickness of greater than 0.4 µm and the thickness of the base layer making up from 50 to 90% of the total thickness.

14. A process for the production of a film as claimed in any one of claims 1 to 13, in which first a precursor film is produced by extrusion or coextrusion in a flat-film die and is then solidified on a chill roll and subsequently oriented in the longitudinal and transverse directions by stretching, which comprises carrying out the longitudinal stretching at a temperature of below 120°C and at a stretching ratio of greater than 5:1.

15. The process as claimed in claim 14, wherein the longitudinal stretching is carried out at a temperature in the range from 95 to 115°C and at a stretching ratio in the range from 5.5:1 to 8.0:1.

16. The process as claimed in claim 14 and/or 15, wherein the transverse stretching temperature is above 140°C, and the transverse stretching ratio does not exceed a value of 10:1.

17. The process as claimed in claim 16, wherein the transverse stretching is carried out at a temperature in the range from 145 to 160°C and at a transverse stretching ratio in the range from 6:1 to 9:1.

18. The process as claimed in one or more of claims 14 to 17, wherein the stretching of the film in the transverse direction is followed by a setting step, in which the film is transported further in the tenter frame in a convergent manner at a temperature of from 20 to 40°C below the transverse stretching temperature, and where the convergence during the setting step is from 15 to 20%.

19. The process as claimed in claim 18, wherein the temperature during the setting step is below 130°C

## Revendications

1. Feuille multicouche de polyoléfines co-extrudée, transparente, soudable sur les deux faces, dont la couche de base est essentiellement constituée d'un polymère de propylène modifié avec une résine, et dont les couches externes sont essentiellement constituées de polymères oléfiniques soudables, caractérisée en ce que

a) la feuille multicouche présente à 120°C un retrait longitudinal supérieur à 7 % et un retrait transversal supérieur à 5 %, les valeurs de retrait étant déterminées à une température de 120°C pendant une durée de 15 minutes selon la nonne DIN 40 434, et

b) la couche de base de la feuille multicouche est constituée essentiellement d'un polymère de propylène dégradé à l'aide d'un peroxyde, le facteur de dégradation A étant compris entre 3 et 10, et

c) le polymère de propylène de la couche de base contient 5 à 25 % en masse d'une résine hydrocarbonée,

d) les couches externes de la feuille multicouche sont essentiellement constituées d'un copolymère statistique éthylène/propylène qui a une teneur en éthylène de 2 à 8 % en masse, un facteur de distribution $F_d$ supérieur à 8 et une température de thermo-oxydation $T_{OX}$ supérieure à 230°C, le facteur de distribution et la température de thermo-oxydation étant déterminés selon les indications données dans la description, et

e) le brillant superficiel de la feuille est supérieur à 100, le brillant superficiel étant déterminé selon la norme DIN 67 530 avec un angle de mesure de 20°, et

f) la feuille multicouche a un trouble inférieur à 22 %, le trouble étant mesuré de façon analogue à la norme ASTM-D 1003-52, à l'aide d'un diaphragme à fente de 1°, sur des couches de quatre feuilles superposées.

**2.** Feuille selon la revendication 1, caractérisée en ce que la feuille a un retrait longitudinal de 8-15 % et un retrait transversal de 6-12 % à 120°C.

**3.** Feuille selon l'une ou plusieurs des revendications 1 à 2, caractérisée en ce que le brillant superficiel est compris entre 105 et 130.

**4.** Feuille selon l'une ou plusieurs des revendications 1 à 3, caractérisée en ce que la feuille a un trouble compris entre 10 et 18 %.

**5.** Feuille selon l'une ou plusieurs des revendications 1 à 4, caractérisée en ce qu'au moins l'une des couches à souder a subi sur la surface un traitement par effet couronne, qui fait que sa tension superficielle est supérieure à 36 mN/m juste après le traitement.

**6.** Feuille selon la revendication 5, caractérisée en ce que la tension superficielle est comprise entre 38 et 41 mN/m juste après le traitement.

**7.** Feuille selon l'une ou plusieurs des revendications 1 à 6, caractérisée en ce que la résine hydrocarbonée de la couche de base a un point de ramollissement supérieur à 120°C.

**8.** Feuille selon l'une ou plusieurs des revendications 1 à 7, caractérisée en ce qu'au moins l'une des couches externes contient en outre un agent antibloquant, l'agent antibloquant ayant une grosseur moyenne de particules comprise entre 1 et 6 µm, et la quantité ajoutée d'agent antibloquant étant comprise entre 0,1 et 2 % en masse par rapport à la masse totale de la couche externe.

**9.** Feuille selon la revendication 8, caractérisée en ce que la grosseur moyenne de particules est comprise entre 2 et 5 µm, et la quantité d'agent antibloquant est comprise entre 0,1 et 0,5 % en masse.

**10.** Feuille selon la revendication 8 et/ou 9, caractérisée en ce que l'agent antibloquant est du dioxyde de silicium, du carbonate de calcium, du silicate de magnésium, un polyamide, un polyester et/ou un copolymère benzoguanamine/formaldéhyde.

**11.** Feuille selon l'une ou plusieurs des revendications 1 à 10, caractérisée en ce que l'épaisseur de la couche externe est supérieure à 0,4 µm.

**12.** Feuille selon la revendication 11, caractérisée en ce que l'épaisseur de la couche externe est comprise entre 0,4 et 1,0 µm.

**13.** Feuille selon l'une ou plusieurs des revendications 1 à 12, caractérisée en ce que l'épaisseur totale de la feuille multicouche est de 10 à 60 µm, l'épaisseur de chacune des couches à souder étant supérieure à 0,4 µm et l'épaisseur de la couche de base représentant 50 à 90 % de l'épaisseur totale.

**14.** Procédé de fabrication de la feuille selon l'une des revendications 1 à 13, selon lequel on prépare d'abord par extrusion ou co-extrusion dans une filière à fente large une feuille intermédiaire que l'on consolide ensuite sur un rouleau refroidisseur, puis que l'on oriente dans le sens longitudinal et transversal par étirement, caractérisé en ce que

en ce que l'on effectue l'étirement longitudinal à une température inférieure à 120°C, et avec un rapport d'étirement supérieur à 5:1.

15. Procédé selon la revendication 14, caractérisé en ce que l'on effectue l'étirement longitudinal à une température comprise entre 95 et 115°C, et avec un rapport d'étirement compris entre 5,5:1 et 8,0:1.

16. Procédé selon la revendication 14 et/ou 15, caractérisé en ce que la température de l'étirement transversal est supérieure à 140°C et en ce que le rapport d'étirement transversal ne dépasse pas une valeur de 10:1.

17. Procédé selon la revendication 16, caractérisé en ce que l'étirement transversal s'effectue à une température comprise entre 145 et 160°C, avec un rapport d'étirement compris entre 6:1 et 9:1.

18. Procédé selon l'une ou plusieurs des revendications 14 à 17, caractérisé en ce que, après l'étirement transversal de la feuille, on effectue une étape de fixage dans laquelle on fait avancer la feuille de façon convergente dans le cadre d'étirage à une température inférieure de 20 à 40°C à la température de l'étirement transversal, la convergence étant de 15 à 20 % pendant l'étape de fixage.

19. Procédé selon la revendication 18, caractérisé en ce que la température est inférieure à 130°C pendant l'étape de fixage.